# EUROPÄISCHE PATENTSCHRIFT

(11) **EP 0 525 357 B1**
(45) Veröffentlichungstag und Bekanntmachung des Hinweises auf die Patenterteilung: **29.03.1995**
(21) Anmeldenummer: 92110089.7
(22) Anmeldetag: 16.06.1992
(51) Int. Cl.: B60H 1/00, B61D 27/00

(54) **Heizeinrichtung**
Heating device
Dispositif de chauffage

(30) Priorität: 31.07.1991 DE 4125286
(43) Veröffentlichungstag der Anmeldung: 03.02.1993
(73) Patentinhaber: MERCEDES-BENZ AG, 70327 Stuttgart (DE)
(72) Erfinder: Kalt, Hans-Peter, Dipl.-Ing., W-7036 Schönaich (DE); Lüders, Michael, Dipl.-Ing., W-7046 Gäufelden 1 (DE); Mattedi, Markus, Dipl.-Ing., W-7401 Walddorfhäslach (DE)

(56) Entgegenhaltungen:
- EP-A- 0 350 896
- DE-A- 3 104 069
- DE-C- 3 941 696
- DE-C- 4 024 004
- US-A- 1 951 521

## Beschreibung

Die Erfindung betrifft eine Heizeinrichtung für den Fahrgastraum von Omnibussen gemäß dem Oberbegriff des Patentanspruchs 1.

Bei solchen Heizeinrichtungen dienen die vielfach nach dem Prinzip des sog. Wärmerohrs arbeitenden Flächenheizkörper dem Zweck, die von den fremdbeheizten Heizrohren herbeigeschaffte Wärme auf eine große Fläche zu verteilen und über diese abzustrahlen. Eine derartige Heizeinrichtung mit nach dem Wärmerohrprinzip arbeitenden Flächenheizkörper ist beispielsweise aus der DE-C-31 04 069 bekannt. Da bei leistungsfähigen nach dem vorgenannten Prinzip arbeitenden Flächenheizkörpern meistens als Wärmeträgermedium Ammoniak oder FCKW eingesetzt wird und gerade diese Stoffe im Betrieb und bei der Entsorgung nicht problemlos sind, ist man verstärkt dazu übergegangen, die Wärmeübertragung ausschließlich durch Wärmeleitung zu bewerkstelligen.

Bei Omnibussen bietet es sich an, die Heizrohre mit dem von dem Motor zur Verfügung gestellten heißen Kühlwasser zu beheizen. Diese Heizrohre müssen einen Mindestquerschnitt aufweisen und benötigen Einbauraum. Insbesondere dann, wenn zur Übertragung einer ausreichend hohen Heizenergie mehrere Heizrohre pro Flächenheizkörper vorgesehen werden müssen, bereitet der für die Heizrohre erforderliche Einbauraum nicht unerhebliche Probleme bei der Unterbringung in der Omnibuskarosserie.

Der Erfindung liegt die Aufgabe zugrunde, eine Heizeinrichtung der eingangs genannten Art zu schaffen, bei welcher die Heizrohre platzsparend an den Omnibus-Seitenwänden untergebracht sind, ohne das Fahrgastraumvolumen zu beeinträchtigen.

Die Aufgabe ist bei einer Heizeinrichtung der im Oberbegriff des Anspruchs 1 definierten Gattung erfindungsgemäß durch die Merkmale im Kennzeichenteil des Anspruchs 1 gelöst.

Durch die erfindungsgemäße Ausformung des die obere Wandfläche der Flächenheizkörper bildenden, durchgehenden Innenverkleidungsträgers als längsdurchgehende Armstütze wird ein Hohlraum geschaffen, in dem mindestens ein Heizrohr geführt werden kann. Durch die damit an der Omnibus-Seitenwand bereits vorhandene Armstütze kann die wandseitige Armlehne an den äußeren Fahrgaststühlen weggelassen werden, so daß durch die ausgeformte Armstütze kein zusätzlicher Bauraum beansprucht wird. Das dem Fahrgast zur Verfügung stehende Raumangebot im Omnibus bleibt unverändert.

Vorteilhafte Ausführungsformen der erfindungsgemäßen Heizeinrichtung mit zweckmäßigen Weiterbildungen und Ausgestaltungen der Erfindung sind in den weiteren Patentansprüchen angegeben.

Gemäß einer bevorzugten Ausführungsform der Erfindung ist ein die untere Wandfläche der Flächenheizkörper bildender weiterer Innenverkleidungsträger weiterhin im Fußbereich der Fahrgastsitze zu einer längsdurchgehenden Fußauflage ausgeformt, die so gestaltet ist, daß in dem entstehenden Hohlraum ein weiteres Heizrohr integriert werden kann. Somit sind zwei heißwasserführende Rohre platzsparend in der Omnibus-Seitenwand untergebracht, die ausreichen, die notwendige Heizenergie auf die Flächenheizkörper zu übertragen.

Die Erfindung ist anhand von in der Zeichnung dargestellten Ausführungsbeispielen im folgenden näher beschrieben. Es zeigen:
- Fig. 1: ausschnittweise einen Querschnitt einer Omnibus-Seitenwand mit integrierten Flächenheizkörpern,
- Fig. 2 und 3: jeweils ausschnittweise einen Querschnitt eines Innenverkleidungsträgers einer Omnibus-Seitenwand gemäß einem weiteren Ausführungsbeispiel, und zwar im Bereich der Armstütze (Fig. 2) und im Bereich der Fußauflage (Fig. 3) für den Fahrgastraum,
- Fig. 4: ausschnittweise einen Querschnitt der Innenverkleidungsträger einer Omnibus-Seitenwand gemäß einem dritten Ausführungsbeispiel.

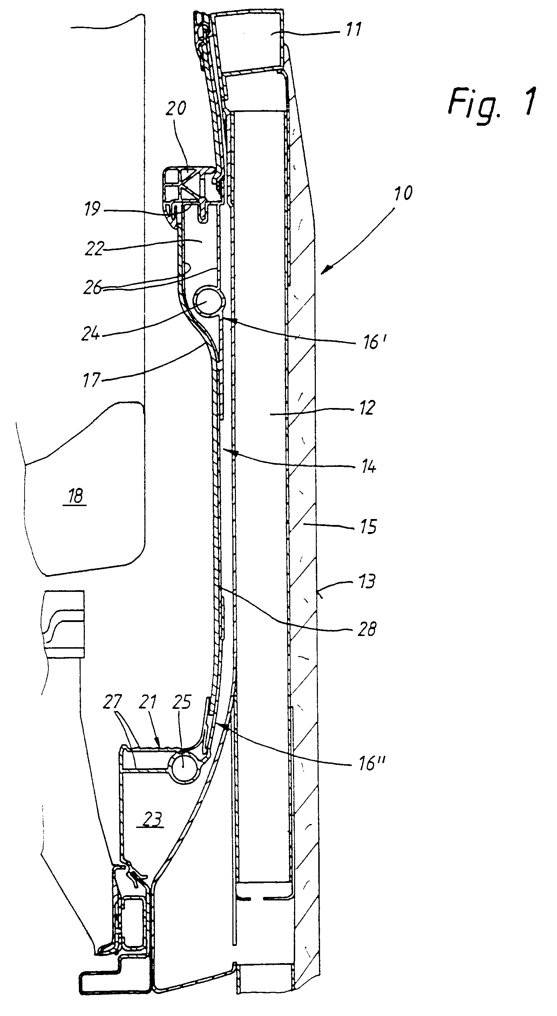

Bei der in Fig. 1 im Querschnitt dargestellten, insgesamt mit 10 bezeichneten Omnibus-Seitenwand ist ein unterhalb der hier nicht zu sehenden Seitenscheiben verlaufender Längsholm mit 11 und ein vertikaler Querholm mit 12 gekennzeichnet. Längsholme 11 und Querholme 12 bilden eine rippenartige Versteifung der Seitenwand 10, die mit einer Außenverkleidung 13 überspannt ist. Auf der Innenseite der Omnibus-Seitenwand 10 sind bis zum Längsholm 11 hochreichend rückseitig wärmegedämmte Flächenheizkörper 14 flächendeckend nebeneinander angeordnet, die mit Abstand den Querholm 12 und der innenseitig mit einer Wärmeisolierung 15 versehenen Außenverkleidung 13 vorgelagert sind. Ein dem Fahrgastraum zugekehrter, aus Aluminium bestehender oberer Wandabschnitt der Flächenheizkörper 14 bildet einen Innenverkleidungsträger 16', der bis zum Längsholm 11 hochragt. Mit 17 ist die Innenwandverkleidung bezeichnet. Mit 18 ist ausschnittweise ein Fahrgaststuhl angedeutet. Bei allen unmittelbar an der Seitenwand 10 hintereinander aufgestellten Fahrgaststühlen 18 ist die üblicherweise vorhandene seitenwandseitige Armlehne entfernt und durch eine im Armstützenbereich der Fahrgaststühle 18 am Innenverkleidungsträger 16' ausgeformte längsdurchgehende Armstütze 19 ersetzt. Die Armstütze 19 ist auf ihrer Oberseite zumindest im Armbereich der Fahrgaststuhlbenutzer mit einem Polster 20 abgedeckt. Weiterhin ist im Fußbereich der Fahrgaststühle 18 ein weiterer Innenverkleidungsträger 16'' zu einer längsdurchgehenden Fußauflage 21 mit einer horizontal liegenden Auflagefläche ausgeformt. Der Innenverkleidungsträger 16' wird von einem aus Aluminium bestehenden unteren Wandabschnitt der Flächenheizkörper 14 gebildet. Die beiden Innenverkleidungsträger 16', 16'' strahlen die ihnen zugeführte Heizenergie großflächig ab. Zur Zuführung der Heizenergie sind in Hohlräumen 22,23, die durch die Ausformungen der Innenverkleidungsträger 16' und 16'' zur Armstütze 19 bzw. Fußauflage 21 geschaffen worden sind, längsdurchgehende Heizrohre 24,25 angeordnet, die an dem Kühlkreislauf des Omnibusmotors angeschlossen sind und mit vom Motor aufgeheiztem Kühlwasser gespeist werden.

Wie aus Fig. 1 ersichtlich ist, bestehen die Innenverkleidungsträger 16' und 16'' aus längsdurchgehenden Strangpreßprofilen, und zwar aus einem oberen Strangpreßprofil 26 im Armlehnenbereich und einem unteren Strangpreßprofil 27 im Fußauflagebereich. Ein als Wärmebrücke dienender mittlerer Profilabschnitt 28, der die beiden Strangpreßprofile 26,27 miteinander verbindet, vergrößert die wärmeabgebende Oberfläche der Flächenheizkörper 14. Oberes Strangpreßprofil 26, mittlere Profilabschnitt 28 und unteres Strangpreßprofil 27 bis hin zur horizontalen Fußauflagefläche der Fußauflage 21 sind von der Innenverkleidung 17 überzogen. Wie aus Fig. 1 zu erkennen ist, ist das Heizrohr 24 an dem oberen Strangpreßprofil 26 und das Heizrohr 25 an dem unteren Strangpreßprofil 27 jeweils einstückig angeformt. Anstelle der einstückigen Anformung können die Heizrohre 24,25 auch separat hergestellt und wärmeleitend mit den Strangpreßprofilen 26,27 verbunden werden.

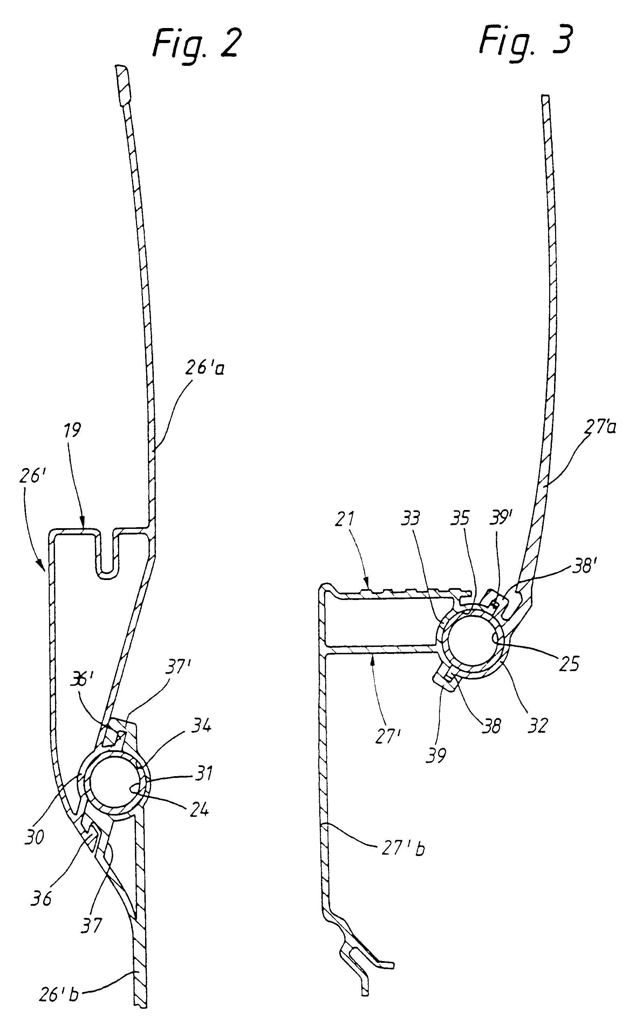

Das obere und das untere Strangpreßprofil 26,27 können auch so ausgebildet werden, wie dies in Fig. 2 und Fig. 3 dargestellt ist. Beide dort skizzierten Strangpreßprofile 26' und 27' sind in zwei Teilprofile 26'a und 26'b bzw. 27'a und 27'b unterteilt. Im Bereich der Trennstellen sind an jedem Teilprofil 26'a,26'b,27'a,27'b jeweils Aufnahmeschalen 30,31,32,33 angeformt, die bei ineinander gehängten Teilprofilen 26'a und 26'b bzw. 27'a und 27'b gegensinnig gewölbt aufeinanderliegen und einen kreiszylindrischen Hohlraum 34 bzw. 35 einschließen. An den Aufnahmeschalen 30,31 bzw. 32,33 der einander zugeordneten Teilprofile 26'a und 26'b bzw. 27'a und 27'b sind Profilflansche 36,36',37,37' bzw. 38,38',39,39' vorgesehen, die bei ineinander gehängten Teilprofilen 26'a und 26'b bzw. 27'a und 27'b formschlüssig ineinander eingreifen. In die Hohlräume 34,35 werden nunmehr die Heizrohre 24,25, die vorzugsweise aus Kupfer hergestellt sind und einen Außendurchmesser haben, der gegenüber dem Innendurchmesser der Hohlräume 34,35 ein Untermaß besitzt, eingeführt und anschließend die Heizrohre 24,25 über sog. Dome plastisch aufgeweitet. Dabei werden die Teilprofile 26'a und 26'b bzw. 27'a und 27'b elastisch gespannt und damit untrennbar miteinander verbunden. Ein derartiges Fügeverfahren zur Herstellung tragfähiger Wandbereiche, wie z.B. Ladebordwände, ist an sich bekannt. Die plastische Aufweitung der Heizrohre 24,25 stellt gleichzeitig auch einen guten Wärmeübergang vom Heizrohr 24 bzw. 25 zum Strangpreßprofil 26' bzw. 27' und damit zu den Innenverkleidungsträgern 16' und 16'' her. Eine wärmeleitende Ankopplung der Heizrohre 24,25 an die Strangpreßprofile 26',27' ist auch durch Punktschweißen oder sog. Rollieren möglich. Bei Verwendung von Dichtungen zwischen den Profilflanschen 36 - 39 können die Hohlräume 34,35 die Funktion der wasserführenden Heizrohre 24,25 selbst übernehmen, so daß die zusätzlichen Heizrohre 24,25 aus Kupfer eingespart werden können. Die beiden in Fig. 2 und 3 skizzierten Strangpreßprofile 26',27', sind in gleicher Weise wie in Fig. 1 dargestellt durch den mittleren, eine Wärmebrücke darstellenden Profilabschnitt 28 miteinander verbunden.

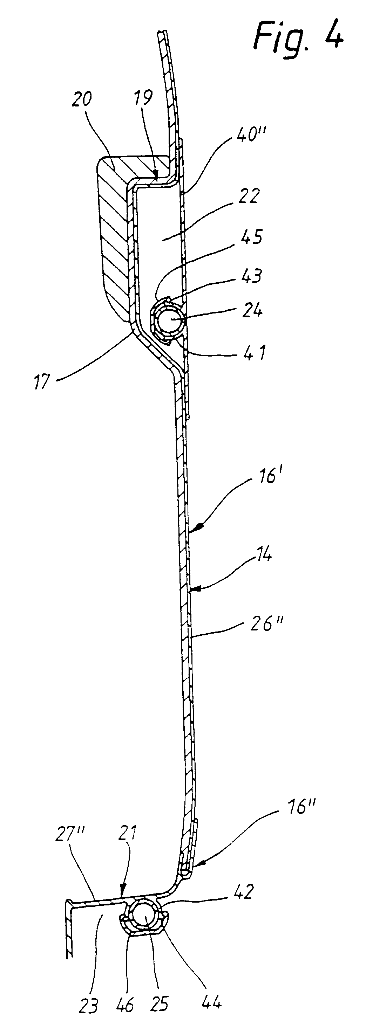

Der in Fig. 4 abschnittweise dargestellte modifizierte Flächenheizkörper 14 ist aus einem unteren Strangpreßprofil 27'', das den Innenverkleidungsträger 16'' bildet, und einen sich daran unmittelbar anschließenden, den Innenverkleidungsträger 16' darstellenden oberen Strangpreßprofil 26'' zusammengesetzt. Der mittlere Profilabschnitt ist entfallen. Ein weiteres Strangpreßprofil 40'', das als Träger für das obere Heizrohr 24 ausgebildet ist, ist an dem oberen Strangpreßprofil 26'' so befestigt, daß das Heizrohr 24 wiederum in dem durch die Ausformung der Armstütze 19 gebildeten Hohlraum 22 einliegt. Das Strangpreßprofil 40'' trägt ebenso wie das Strangpreßprofil 27'' eine halbkreiszylindrische Aufnahmeschale 41 bzw. 42, die einstückig an das Strangpreßprofil 27'' bzw. 40'' angeformt ist. Jede Aufnahmeschale 41 bzw. 42 trägt diametral angeordnete radial wegstehende Spannstege 43 bzw. 44. Die Heizrohre 24,25, die ebenfalls aus Kupfer gefertigt sind, sind in die Aufnahmeschalen 41,42 formschlüssig eingelegt und mittels federnder Spannklammern 45,46, die die Spannstege 43,44 hintergreifen, sowohl in den Aufnahmeschalen 41,42 befestigt als auch an die Aufnahmeschalen 41,42 gut wärmeleitend angekoppelt. Das Strangpreßprofil 26'' ist von der Innenwandverkleidung 17 überzogen.

## Patentansprüche

1. Heizeinrichtung für den Fahrgastraum von Omnibussen mit Flächenheizkörpern (14), die an den Omnibus-Seitenwänden unterhalb der Seitenscheiben angeordnet sind, und mit entlang der Omnibus-Seitenwände längsdurchgehend verlaufenden, heizwasserführenden Heizrohren (24,25), die wärmeleitend an die Flächenheizkörper (14) angekoppelt sind,
**dadurch gekennzeichnet**,
daß die dem Fahrgastraum zugekehrte obere Wandfläche der Flächenheizkörper (14) von einem durchgehenden Innenverkleidungsträger (16') der jeweiligen Omnibus-Seitenwand (10) gebildet wird, daß der Innenverkleidungsträger (16') im Armstützbereich der Fahrgaststühle (18) zu einer längsdurchgehenden Armstütze (19) ausgeformt ist und daß ein Heizrohr (24) im Hohlraum (22) der Armstützenausformung verlegt ist.

2. Einrichtung nach Anspruch 1,
**dadurch gekennzeichnet,**
daß dem die obere Wandfläche der Flächenheizkörper (14) darstellenden Innenverkleidungsträger (16') ein die untere Wandfläche der Flächenheizkörper (14) bildender weiterer Innenverkleidungsträger (16') zugeordnet und zu einer längsdurchgehenden Fußauflage (21) ausgeformt ist und daß ein weiteres Heizrohr (25) im Hohlraum (23) der Fußauflagenausformung verlegt ist.

3. Einrichtung nach Anspruch 2,
**dadurch gekennzeichnet,**
daß die beiden Innenverkleidungsträger (16',16'') durch einen eine Wärmebrücke bildenden Profilabschnitt (28) miteinander verbunden sind.

4. Einrichtung nach einem der Ansprüche 1 - 3,
**dadurch gekennzeichnet,**
daß die Innenverkleidungsträger (16',16'') aus längsdurchgehenden Strangpreßprofilen (26,27,28;26',27';26'',27'',40'') zusammengesetzt sind.

5. Einrichtung nach Anspruch 4,
**dadurch gekennzeichnet,**
daß die Heizrohre (24,25) einstückig an den Strangpreßprofilen (26,27) angeformt oder mit diesen fest verbunden sind.

6. Einrichtung nach Anspruch 4,
**dadurch gekennzeichnet,**
daß längsdurchgehende halbkreiszylindrische Aufnahmeschalen (41,42) mit diametralen, radial wegstehenden Spannstegen (43,44) einstückig an den Strangpreßprofilen (27'';40'') angeformt oder mit diesen fest verbunden sind, daß die vorzugsweise aus Kupfer hergestellten Heizrohre (24,25) in jeweils eine der Aufnahmeschalen (41,42) formschlüssig eingelegt und mittels die Spannstege (43,44) hintergreifenden federnden Spannklammern (45,46) wärmeleitend an den Aufnahmeschalen (41,42) angekoppelt sind.

7. Einrichtung nach Anspruch 4,
**dadurch gekennzeichnet,**
daß die Trennstellen der Strangpreßprofile (26'a,26'b,27'a,27'b) in den Bereich der Heizrohre (24,25) gelegt sind, daß die Stangpreßprofile (26'a,26'b,27'a,27'b) im Trennbereich jeweils eine längsdurchgehende Aufnahmeschale (30-33) tragen und daß die Aufnahmeschalen (30-33) so geformt sind, daß sie bei ineinander gehängten Strangpreßprofilen (26'a,26'b,27'a,27'b) gegensinnig gewölbt aufeinanderliegen und einen kreiszylindrischen Hohlraum (34,35) zur Aufnahme eines Heizrohrs (24,25) oder das Heizrohr (24,25) selbst bilden.

8. Einrichtung nach Anspruch 7,
**dadurch gekennzeichnet,**
daß in den kreiszylindrischen Hohlraum (34,35) ein Heizrohr (24,25), vorzugsweise aus Kupfer, eingeschoben ist und durch Drücken (Aufdomen), Rollieren oder Punktschweißen wärmeleitend an die Strangpreßprofile (26'a,26'b,27'a,27'b) angekoppelt ist.

9. Einrichtung nach einem der Ansprüche 1 - 8,
**dadurch gekennzeichnet,**
daß die längsdurchgehende Armstützenausformung (19) im Armbereich der Fahrgaststuhlbenutzer mit einer Polsterauflage (20) versehen ist.

## Claims

1. Heating installation for the passenger compartment of omnibuses, comprising radiant heating elements (14) which are disposed on the omnibus side walls under the side windows, and comprising hot-water-carrying heating pipes (24, 25) which extend with longitudinal continuity along the omnibus side walls and which are coupled with a thermally conductive connection to the radiant heating elements (14), characterised in that the upper wall surface of the radiant heating elements (14) which faces the passenger compartment is formed by a continuous interior cladding bearer (16') of the respective omnibus side wall (10), in that the interior cladding bearer (16') is formed in the armrest region of the passenger seats (18) into a longitudinally continuous arm support (19), and in that a heating pipe (24) is laid in the cavity (22) of the arm support construction.

2. Installation according to Claim 1, characterised in that an additional interior cladding bearer (16''), forming the lower wall surface of the radiant heating elements (14) is associated with the interior cladding bearer (16') constituting the upper wall surface of the radiant heating elements (14) and is formed into a longitudinally continuous footrest (21), and in that an additional heating pipe (25) is laid in the cavity (23) of the footrest construction.

3. Installation according to Claim 2, characterised in that the two interior cladding bearers (16', 16'') are connected together by a section portion (28) forming a heat bridge.

4. Installation according to one of Claims 1 to 3, characterised in that the interior cladding bearers (16', 16'') are composed of longitudinally continuous extruded sections (26, 27, 28; 26', 27'; 26'', 27'', 40'').

5. Installation according to Claim 4, characterised in that the heating pipes (24, 25) are formed integrally with the extruded sections (26, 27) or are joined fast to them.

6. Installation according to Claim 4, characterised in that longitudinally continuous semicircular cylindrical receptacle shells (41, 42) having diametrical radially projecting clamp webs (43, 44) are formed integrally with the extruded sections (27''; 40'') or are joined fast to them, and in that the heating pipes (24, 25), which are preferably made of copper, are received positively in a respective one of the receptacle shells (41, 42) and by means of spring clips (45, 46) engaging behind the clamp webs (43, 44) are coupled with a thermally conductive connection to the receptacle shells (41, 42).

7. Installation according to Claim 4, characterised in that the separation points of the extruded sections (26'a, 26'b, 27'a, 27'b) are situated in the region of the heating pipes (24, 25), in that the extruded sections (26'a, 26'b, 27'a, 27'b) each carry in the separation region a longitudinally continuous receptacle shell (30 - 33), and in that the receptacle shells (30 - 33) are so shaped that, when the extruded sections (26'a, 26'b, 27'a, 27'b) are hung one in the other, they lie one on the other with oppositely directed curvatures and form a circular cylindrical cavity (34, 35) for the reception of a heating pipe (24, 25) or themselves form the heating pipe (24, 25).

8. Installation according to Claim 7, characterised in that a heating pipe (24, 25), preferably of copper, is inserted into the circular cylindrical cavity (34, 35) and is coupled with pressing (doming), rolling or spot welding, with a thermally conductive connection, to the extruded sections (26'a, 26'b, 27'a, 27'b).

9. Installation according to one of Claims 1 to 8, characterised in that the longitudinally continuous arm support construction (19) is provided in the arm region of the occupant of the passenger seat with a padded rest (20).

## Revendications

1. Dispositif de chauffage pour le compartiment à passagers d'autocars comportant des corps chauffants surfaciques (14), qui sont disposés sur les parois latérales de l'autocar en-dessous des glaces latérales, ainsi que des tubes chauffants (24, 25), s'étendant longitudinalement en continu le long des parois latérales de l'autocar, canalisant de l'eau chaude et qui sont reliés aux corps chauffants surfaciques (14) de façon à transmettre la chaleur, caractérisé en ce que la surface supérieure de paroi, dirigée vers le compartiment à passagers, des corps chauffants surfaciques (14) est constituée par un support continu (16') de revêtement intérieur de la paroi latérale d'autocars (10) correspondante, en ce que le support (16') de revêtement intérieur est profilé par écartement, dans une zone d'accoudoir des sièges de passagers (18) sous la forme d'un accoudoir longitudinalement continu (19) et en ce qu'un tube chauffant (24) est disposé dans la cavité (22) de la partie profilée en accoudoir.

2. Dispositif selon la revendication 1, caractérisé en ce que le support (16') de revêtement intérieur, constituant la surface supérieure de paroi des corps chauffants surfaciques (14), est associé à un autre support (16') de revêtement intérieur, formant la surface inférieure de paroi des corps chauffants surfaciques (14) et qui est profilé par écartement sous la forme d'un repose-pieds (21) longitudinalement continu et en ce qu'un autre tube chauffant (25) est disposé dans la cavité (23) de la partie profilée en repose-pieds.

3. Dispositif selon la revendication 2, caractérisé en ce que les deux supports de revêtement intérieur (16', 16'') sont reliés entre eux par une partie profilée (28) formant un pont de transmission de chaleur.

4. Dispositif selon une des revendications 1 à 3, caractérisé en ce que les supports de revêtement intérieur (16' et 16'') sont composés de profilés extrudés (26, 27, 28 ; 26', 27' ; 26'', 27'', 40'') longitudinalement continus.

5. Dispositif selon la revendication 4, caractérisé en ce que les tubes chauffants (24, 25) sont formés d'une seule pièce sur les profilés extrudés (26, 27) ou bien sont reliés solidement avec eux.

6. Dispositif selon la revendication 4, caractérisé en ce que des coquilles réceptrices (41, 42) de forme demi-cylindrique circulaire, longitudinalement continues et comportant des entretoises diamétrales de fixation (43, 44) disposées en saillies, sont formées d'une seule pièce sur les profilés extrudés (27'' ; 40'') ou bien sont reliées solidement avec eux, en ce que les tubes chauffants (24, 25), réalisés de préférence en cuivre, sont maintenus par conjugaison de formes chacun dans une des coquilles réceptrices (41, 42) et sont reliés de façon à transmettre la chaleur aux coquilles réceptrices (41, 42) au moyen d'attaches souples de fixation (45, 46) s'accrochant en arrière des entretoises de fixation (43, 44)

7. Dispositif selon la revendication 4, caractérisé en ce que les zones de séparation des profilés extrudés (26'a, 26'b, 27'a, 27'b) sont disposées dans la zone des tubes chauffants (24, 25), en ce que les profilés extrudés (26'a, 26'b, 27'a, 27'b) portent chacun, dans la zone de séparation, une coquille réceptrice (30-33) longitudinalement continue et en ce que les coquilles réceptrices (30-33) sont formées de telle sorte que, dans le cas de profilés extrudés (26'a, 26'b, 27'a, 27'b) accrochés l'un dans l'autre, elles s'appuient l'une contre l'autre avec des courbures en sens inverse et forment une cavité cylindrique circulaire (34, 35) pour recevoir un tube chauffant (24, 25), ou bien le tube chauffant (24, 25) proprement dit.

8. Dispositif selon la revendication 7, caractérisé en ce que dans la cavité cylindrique circulaire (34, 35) est disposé un tube chauffant (24, 25), de préférence en cuivre, qui est relié de façon à transmettre la chaleur aux profilés extrudés (26'a, 26'b, 27'a, 27'b) par compression (cintrage en dôme), par roulage ou par soudage par points.

9. Dispositif selon une des revendications 1 à 8, caractérisé en ce que la partie profilée en accoudoir (19), longitudinalement continue, est pourvue d'un rembourrage d'appui (20) dans la zone du bras de l'utilisateur du siège de passager.
